# EUROPÄISCHE PATENTSCHRIFT

(11) **EP 3 217 943 B1**
(45) Veröffentlichungstag und Bekanntmachung des Hinweises auf die Patenterteilung: **01.01.2020**
(21) Anmeldenummer: 15808342.8
(22) Anmeldetag: 11.11.2015
(51) Int. Cl.: A61H 3/04, B62B 7/04, B62B 3/02, B62B 5/06, A61H 3/00

(54) **MOBILE GEH- UND TRANSPORTHILFE-VORRICHTUNG**
MOBILE WALKING AND TRANSPORT AID DEVICE
DISPOSITIF MOBILE D'AIDE À LA LOCOMOTION ET AU TRANSPORT

(30) Priorität: 11.11.2014 DE 102014016580; 16.01.2015 DE 102015000270
(43) Veröffentlichungstag der Anmeldung: 20.09.2017
(73) Patentinhaber: C4C GmbH, 73230 Kirchheim unter Teck (DE)
(72) Erfinder: BRAMSIEPE, Holger, 42369 Wuppertal (DE); ROOD, Günter, Kurt, 42369 Wuppertal (DE)
(74) Vertreter: Schleitzer, Dirk-Karsten
(86) Internationale Anmeldenummer: PCT/EP2015/002263
(87) Internationale Veröffentlichungsnummer: WO 2016/074791

(56) Entgegenhaltungen:
- EP-A2- 0 229 445
- WO-A1-2009/101509
- DE-U1- 29 716 985
- DE-U1-202011 104 664
- JP-A- 2002 065 774
- US-A- 5 056 805

## Beschreibung

Die Erfindung betrifft eine mobile Geh- und Transporthilfe-Vorrichtung, insbesondere zur Unterstützung gehbehinderter Personen, mit einem Fahrgestell mit Rädern und mit zwei mit dem Fahrgestell verbundenen äußeren Seitenstützen als tragenden Elementen.

Mobile Gehhilfe-Vorrichtungen sind unter dem Begriff "Rollatoren" bekannt. Derartige Rollatoren weisen in der Regel ein Fahrgestell mit Rädern sowie am Fahrgestell angeordnete Haltegriffe zum Abstützen eines Benutzer beim Laufen auf. Mit Gehhilfen können geheingeschränkte Person weiterhin mobil sein, da ihnen der Rollator Sicherheit bei der Fortbewegung bietet. Gehhilfen ermöglichen den Benutzern auch, weite Strecken zurückzulegen, da sie gegebenenfalls als Sitz dienen können und somit Pausen ermöglicht werden. Des Weiteren bieten Gehhilfen durch angebrachte Körbe eine Hilfestellung beim Transport von leichten Gegenständen, wie beispielsweise Lebensmitteln nach einem Einkauf.

Aus der DE 297 16 985 U1 ist ein Kinderwagen bzw. Kindersportwagen mit einem klappbaren Wagengestell bekannt, das einen Schieberbügel aufweist, der in einem mittleren Bereich zwischen den Vorderrädern und den Hinterrädern um eine Schwenkachse am Wagengestell schwenkbar angebracht ist. Durch die Verschwenkung des Schieberbügels kann der Kinderwagen entweder von der einen Seite geschoben werden, während man das sitzenden Kind im Blick hat, oder von der anderen Richtung geschoben werden kann, so dass die schiebende Person und das im Kinderwagen sitzende Kind die gleiche Blickrichtung haben. Eine vergleichbare Konstruktion eines Kinderwagens ist beispielsweise auch aus der US 5,056,805 A bekannt.

Um den Benutzer einer mobilen Gehhilfe-Vorrichtung die Fortbewegung zu erleichtern und insbesondere bei der Bewältigung von Steigungen und Neigungen zu unterstützen, ist aus der DE 103 18 929 B3 ein intelligenter Gehhilfe-Roboter bekannt, der eine motorisierte Antriebseinrichtung sowie eine Steuereinrichtung zur Ansteuerung der Antriebseinrichtung hinsichtlich Antriebsgeschwindigkeit der Räder und Richtung in Abhängigkeit von einer Einwirkung des Benutzers auf am Roboter angeordnete Haltegriffe aufweist. Die vom Benutzer auf die Haltegriffe ausgeübten Kräfte und Momente werden über Sensoren erfasst und in entsprechende Bewegungsbefehle für die Ansteuerung der Antriebseinrichtung umgesetzt. Der Gehhilfe-Roboter kann ein Navigationssystem aufweisen, mit dem der Roboter den Benutzer aktiv zu einem vorgebbaren Ziel führen kann. Darüber hinaus kann eine Datenfassungs-Einrichtung vorgesehen sein, um während der Fortbewegung der Gehhilfe-Vorrichtung Bewegungsdaten zu erfassen und für eine spätere Auswertung zu speichern.

Aufgabe der vorliegenden Erfindung ist es, eine mobile Geh- und Transporthilfe-Vorrichtung zur Verfügung zu stellen, die in einfacher Weise, bei hohem Benutzerkomfort und bei einem ästhetisch ansprechenden Erscheinungsbild eine Benutzung in unterschiedlichen Benutzungsmodi, insbesondere zur Unterstützung bei der alltäglichen Fortbewegung und beim Transport von Lasten, zulässt. Hierbei soll die Geh- und Transporthilfe-Vorrichtung dem Benutzer in allen Nutzungsmodi eine ergonomisch günstige Körperhaltung ermöglichen und einer schnellen Ermüdung des Benutzers und Haltungsschäden vorbeugen. Eine weitere Aufgabe der Erfindung besteht darin, die Unterstützungsfunktion von Gehhilfe-Vorrichtungen bei der alltäglichen Fortbewegung weiter zu verbessern.

Nachfolgend wird die erfindungsgemäße Vorrichtung der Einfachheit halber als "Gehhilfe-Vorrichtung" bezeichnet, was jedoch nicht ausschließt, dass die erfindungsgemäße Vorrichtung ergänzend oder auch lediglich als Transporthilfe-Vorrichtung benutzt wird.

Ein Aspekt der vorliegenden Erfindung sieht zur Lösung der oben genannten Aufgaben vor, dass die Seitenstützen aus wenigstens einer ersten gegenüber der Lotrichtung bzw. der Senkrechten nach unten gekippten Stellung, insbesondere zum Schieben der Gehhilfe-Vorrichtung von hinten und/oder zum Abstützen eines Benutzers beim Laufen zwischen und/oder hinter der Gehhilfe-Vorrichtung und/oder zum Sitzen eines Benutzers auf der Gehhilfe-Vorrichtung, um eine horizontale Achse in wenigstens eine zweite nach vorne gekippte Stellung schwenkbar am Fahrgestell befestigt sind, insbesondere zum Ziehen der Gehhilfe-Vorrichtung von vorne. Die Seitenstützen können um bis zu 180° schwenkbar an dem Fahrgestell angelenkt sein.

Durch die schwenkbar befestigten Seitenstützen wird eine einfache Möglichkeit geschaffen, die erfindungsgemäße Gehhilfe-Vorrichtung in unterschiedlichen Nutzungsmodi/Grundarten zu benutzen und hierbei stets eine ergonomisch günstige Körperhaltung des Benutzers zu unterstützen. Bei einer ersten, vorzugsweise gegenüber der Vertikalen nach hinten gekippten Stellung der Seitenstützen, kann die erfindungsgemäße Gehhilfe-Vorrichtung als Rollator, als Einkaufswagen und/oder auch als Sitz genutzt werden. Bei Anordnung der Seitenstützen in der zweiten, gegenüber der Vertikalen nach vorne gekippten Stellung kann die Gehhilfe-Vorrichtung dagegen in der Art eines Handwagens/Bollerwagens genutzt werden. In der ersten Stellung und, gegebenenfalls, in der zweiten Stellung lassen sich die Seitenstützen arretieren, wenn ein bestimmter Winkel zwischen den Längsachsen der beiden Seitenstützen und einer horizontalen Bodenebene erreicht ist. Grundsätzlich ist es hierbei möglich, dass sich die Seitenstützen in unterschiedlichen, nach hinten gekippten Stellungen und/oder in unterschiedlichen, nach vorne gekippten Stellungen arretieren lassen. Es können also unterschiedliche Winkel zwischen den Seitenstützen und einer horizontalen Ebene fest eingestellt sein, wenn die nach hinten und/oder nach vorne gekippten Seitenstützen arretiert sind.

Darüber hinaus kann der konstruktive Aufbau der Gehhilfe-Vorrichtung das vorzugsweise vollständige Umlegen der Seitenstützen in eine im Wesentlichen horizontale Stellung zulassen, so dass sich ein platzsparender Aufbau in einem Transportmodus der Gehhilfe ergibt.

Der spitze Winkel zwischen einer Ebene rechtwinklig zur Lotrichtung, beispielsweise einer horizontalen Bodenebene durch die Schwenkachse der Seitenstütze, und einer Seitenstütze, bezogen auf die Hauptlängsachse der Seitenstütze, kann in einer ersten nach hinten gekippten Stellung der Seitenstütze einen Wert zwischen 40° und 90°, vorzugsweise zwischen 60° und 80°, weiter vorzugsweise von ca. 70°, annehmen (beispielsweise im Rollatormodus, Einkaufswagenmodus und/oder Sitzmodus), Die Seitenstützen sind dann gegenüber der Vertikalen nach hinten bzw. in Richtung zur Rückseite der Gehhilfe gekippt bzw. geneigt angeordnet, was eine Nutzung der Gehhilfe insbesondere als Rollator, als Einkaufswagen oder als Sitz zulässt. Die Seitenstützen können sich auch nach hinten gekippt in wenigstens einer bestimmten Winkelstellung zur Horizontalen arretieren lassen, wobei ein geringerer Winkel zwischen der Horizontalen und den Seitenstützen eine Nutzung der Gehhilfe als Kinderwagen (Kinderwagenmodus) und eine steilere Stellung der Seitenstützen die beschriebene Nutzung als Rollator, Einkaufswagen und/oder als Sitz unterstützt. Nach dem Arretieren der Seitenstützen lassen sich die Seitenstützen nicht mehr verschwenken. Damit ist ein sicherer Betrieb der Gehhilfe in jedem Nutzungsmodus gewährleistet.

In der zweiten nach vorne gekippten Stellung beträgt der Winkel zwischen einer Ebene rechtwinklig zur Lotrichtung und den Längsachsen der Seitenstützen mehr als 90° und kann vorzugsweise zwischen 125° und 145° betragen, Die vorgenannte Winkelangabe bezieht sich auf den stumpfen Winkel zwischen der horizontalen Ebene und den Längsachsen der Seitenstützen. Grundsätzlich kann der Winkel zwischen der horizontalen Ebene und den Längsachsen der Seitenstützen auch bis 180° betragen, so dass sich die Seitenstützen ohne Winkelbeschränkung nach vorne kippen lassen. Eine freie Schwenkbarkeit der Seitenstützen beim Ziehen der Gehhilfe von vorne ermöglicht eine dem menschlichen Körper angepasste Haltung des Benutzers und stellt eine hohe Benutzerfreundlichkeit sicher. Im Handwagenmodus sind daher die Seitenstützen vorzugsweise nicht in einer bestimmten nach vorne gekippten Stellung arretiert, sondern es kann sich die Winkelstellung der Seitenstützen frei an die Körperhaltung des Benutzers und/oder an die Topographie des Bodens anpassen. Grundsätzlich ist es jedoch auch möglich, dass die Seitenstützen in einer nach vorne gekippten Stellung arretiert werden, um einen bestimmten Winkel zwischen den Längsachsen der Seitenstützen und einer horizontalen Ebene einzustellen.

Im Transportmodus, wenn die Seitenstützen im Wesentlichen vollständig und vorzugsweise nach hinten umgelegt sind, kann der Winkel zwischen einer horizontalen Ebene und den Seitenstützen im Bereich zwischen 0° und 15° liegen. Im Transportzustand der Gehhilfe-Vorrichtung, wenn die Seitenstützen vollständig umgelegt sind, lassen sich diese vorzugsweise auch arretieren. Dadurch wird ein sehr platzsparender Aufbau der Gehhilfe-Vorrichtung für Transportzwecke sichergestellt.

Alle vorgenannten Winkelangaben beziehen sich auf eine Winkelmessung im Uhrzeigersinn und auf eine Ansicht der Gehhilfe-Vorrichtung von der Seite.

Grundsätzlich kann an jeder Seitenstütze ein separates Griffelement vorgesehen sein, wobei die Griffelemente nicht miteinander verbunden sind. Ein weiterer, gegebenenfalls auch unabhängig von den Merkmalen der oben beschriebenen Ausführungsform der Gehhilfe-Vorrichtung zu realisierender vorteilhafter Aspekt der Erfindung sieht wenigstens ein mit beiden Seitenstützen verbundenes gemeinsames Griffelement vor, das zum Abstützen des Benutzers beispielsweise im Rollatormodus dient und Griff- bzw. Kontaktflächen für die Hände des Benutzers aufweist.

Durch das Griffelement wird die Anordnung der Seitenstützen versteift und es wird eine hohe Stabilität der Gehhilfe-Vorrichtung erzielt.

Bei einer besonders bevorzugten Ausführungsform kann das Griffelement bügelförmig ausgebildet sein und weist dann vorzugsweise einen mittleren in einer horizontalen Ebene quer zur Fahrtrichtung der Gehhilfe-Vorrichtung angeordneten Querholmabschnitt und zwei seitliche Längsholmabschnitte auf, die mit dem Querholmabschnitt verbunden sind. Die Längsholmabschnitte des Griffelementes und die Seitenstützen liegen vorzugsweise in parallelen Ebenen. Die Längsholmabschnitte sind schwenkbar mit den Seitenstützen verbunden. Weiter vorzugsweise sind Längs- und Querholmabschnitte im Wesentlichen geradlinig ausgebildet und über bogenförmige Abschnitte miteinander verbunden. Das Griffelement kann dann als U-förmiger oder entsprechend abgewinkelt ausgebildeter offener Bügel ausgebildet sein. Grundsätzlich kann das Griffelement jedoch auch einen geschlossenen Bügel bilden, wobei beispielsweise zwei Querholmabschnitte mit zwei seitlichen Längsholmabschnitten verbunden sein können. Beim Benutzen der Gehhilfe-Vorrichtung kann sich der Benutzer auf den mittleren Querholmabschnitt oder gegebenenfalls auch auf den Längsholmabschnitten abstützen. Die Ausbildung des Griffelementes als Griffbügel begünstigt eine für das Handgelenk des Benutzers schonende Haltung. Das Griffelement kann einen einstückigen, insbesondere aus Kunststoff, hergestellten Profilkörper aufweisen, der die Längsholmabschnitte und den Querholmabschnitt bildet. Das Griffelement kann aus einem oder mehreren Rohrprofilen bestehen und/oder hergestellt sein.

Um eine optimale Nutzerunterstützung beim Benutzen der erfindungsgemäßen Gehhilfe-Vorrichtung in den unterschiedlichen Nutzungsmodi zu erreichen, ist es zweckmäßig, wenn das Griffelement um eine horizontale Achse schwenkbar mit den Seitenstützen verbunden ist. Die schwenkbare Befestigung des Griffelementes an den Seitenstützen ermöglicht eine bedarfsweise Anpassung der Stellung des Griffelementes an den jeweiligen Nutzungsmodus der Gehhilfe-Vorrichtung und stellt eine sehr ergonomische Körperhaltung des Benutzers sicher.

Die nachfolgend beschriebenen Winkelstellungen des Griffelementes beziehen sich auf den jeweiligen Winkel zwischen den Längsachsen der Seitenstützen und dem Griffelement. Insbesondere bezieht sich die Winkelstellung auf den Winkel zwischen den Längsachsen der Seitenstützen und einer Längsachse des Griffelementes bzw. einer durch die Schwenkachse des Griffelements gelegten Ebene, in der die Abstützflächen des Griffelementes für den Benutzer liegen. Befindet sich das Griffelement in einer gegenüber den Seitenstützen nach hinten gekippten Stellung, bezieht sich die Winkelangabe auf eine Drehung des Griffelementes relativ zu den Seitenstützen gegen den Uhrzeigersinn. Befindet sich das Griffelement in einer zweiten, gegenüber den Seitenstützen nach vorne gekippten Stellung, bezieht sich die Winkelangabe auf eine Drehung des Griffelementes relativ zu den Seitenstützen mit dem Uhrzeigersinn.

Besonders zweckmäßig ist es, wenn das Griffelement in wenigstens einer ersten, gegenüber den Seitenstützen nach hinten gekippten Stellung und, gegebenenfalls, in wenigstens einer zweiten, gegenüber den Seitenstützen nach vorne gekippten Stellung arretierbar ist. Vorzugsweise ist jedoch vorgesehen, dass das Griffelement nach vorne frei schwenkbar und bewegbar an den Seitenstützen angeordnet ist, so dass beim Ziehen der Gehhilfe von vorne eine dem menschlichen Körper angepasste Haltung des Benutzers und eine hohe Benutzerfreundlichkeit gewährleistet sind. Im Handwagenmodus wird das Griffelement daher vorzugsweise nicht bei Erreichen einer bestimmten nach vorne gekippten Stellung arretiert, sondern es kann sich die Winkelstellung des Griffelementes frei an die Körperhaltung des Benutzers anpassen.

Beispielsweise in einem Einkaufswagenmodus der Vorrichtung, wenn die Seitenstützen gegenüber der Vertikalen nach hinten gekippt sind, kann sich das Griffelement in einer gegenüber den Seitenstützen nach hinten gekippten Stellung der Längsholme befinden und in dieser Stellung arretiert sein. In dieser Stellung kann das Griffelement dazu dienen, die Gehhilfe-Vorrichtung in der Art eines Einkaufswagens vor sich herzuschieben. In der gleichen Stellung kann sich das Griffelement befinden, wenn die Gehhilfe-Vorrichtung in einem Kinderwagenmodus genutzt wird. Der Winkel zwischen den Seitenstützen und dem Griffelement kann hierfür einen Wert zwischen 0° und 90°, vorzugsweise von ca. 45°, annehmen.

Das Griffelement lässt sich vorzugsweise auch in eine gegenüber den Seitenstützen nach vorne gekippte Stellung schwenken und dort gegebenenfalls arretieren. In dieser Stellung kann der Winkel zwischen den Seitenstützen und dem Griffelement einen Wert zwischen 10° und 90°, vorzugsweise zwischen 30° und 60°, insbesondere von ca. 45°, annehmen. Diese Stellung des Griffelementes kennzeichnet insbesondere den Rollatormodus, wenn die Gehhilfe von einem hinter der Gehhilfe oder zwischen den Hinterrädern der Gehhilfe positionierten Benutzer vor sich hergeschoben wird. Eine ähnliche oder auch gleiche Stellung kann das Griffelement aufweisen, wenn die Gehhilfe-Vorrichtung als Sitzhilfe benutzt wird. In diesem Fall kann ein Querholm des Griffelementes als Rückenlehne dienen, wenn sich ein Benutzer auf einen Sitz der Vorrichtung gesetzt hat. Im Rollatormodus kann sich das Griffelement auch in Verlängerung der Seitenstützen nach oben erstrecken und so einen aufrechten Gang des Benutzers fördern. Das schwenkbare Griffelement eröffnet die Möglichkeit, Hand und Griffstellungen während der Benutzung zu wechseln und vermindert dadurch Ermüdungs- und Überlastungserscheinungen.

Das Griffelement kann durch knaufartige Handballenauflagen unterstützt werden, wobei zwei seitliche, gegenüber den Längsholmen des Griffelementes abgewinkelte Knaufabschnitte als Handballenauflagen vorgesehen sein können. Der Winkel zwischen den Knaufabschnitten und den Längsholmen kann sich gegebenenfalls in Abhängigkeit von der Winkelstellung des Griffelementes in den verschiedenen Nutzungsmodi der Gehhilfe-Vorrichtung ändern. Im Einkaufswagenmodus und/oder Rollatormodus kann sich ein Benutzer auch lediglich auf dem Griffelement bzw. dem mittleren Querholm des Griffelementes abstützen oder er kann die Gehhilfe lediglich an dem Griffelement schieben. Das Gleiche gilt für das Ziehen der Gehhilfe im Handwagenmodus. Ein reduzierter Kontakt und eine Interaktion mit dem Griffelement liefert hierbei eine ausreichende Kontrolle und Auflage für den aktiven Nutzer. Im Rollatormodus können die Knaufabschnitte aber auch als tragende Stützflächen für die Handballen des Benutzers vorgesehen sein, wenn dieser sich am Griffelement festhält. Dadurch wird eine maximale Unterstützung des Benutzers erreicht und das Sicherheitsgefühl beim Benutzer verstärkt.

Die Knaufabschnitte können starr oder gelenkig mit dem Griffelement und/oder mit den Seitenstützen verbunden sein. Vorzugsweise sind die Knaufabschnitte ausgebildet als starre Abschnitte an Anschlusselementen, die Drehgelenke aufweisen, wobei die Anschlusselemente mit den Seitenstützen verbunden sind und wobei über die Drehgelenke eine Verbindung mit dem Griffelement erfolgt. Der Winkel zwischen den Knaufabschnitten und den Längsholmen des Griffelementes hängt dann von der Winkelstellung des Griffelementes ab. Die Anschlussstücke mit den Drehgelenken können höhenverstellbar sein, um eine Höhenanpassung des Griffelementes an die Größe des Benutzers zu ermöglichen. Durch die Möglichkeit einer Höhen- und Winkelverstellung des Griffelementes lässt die Gehhilfe-Vorrichtung an eine Vielzahl von Benutzern und ihre individuellen Nutzungs- und Handhabungsanforderungen in einfacher Weise anpassen.

Es ist zweckmäßig, wenn das Griffelement mit einer Bremseinrichtung zusammenwirkt. Hier kann eine Schwenkbewegung des Griffelementes zu einer automatischen Aktivierung einer Bremseinrichtung führen. Eine Kopplung zwischen dem Griffelement und der Bremseinrichtung kann beispielsweise über einen Bowdenzug erfolgen, mit dem eine Schwenkbewegung des Griffelementes in eine Verstellbewegung eines Bremsbelages der Bremseinrichtung umgesetzt wird, der gegen ein Rad wirkt. Auch kann vorgesehen sein, dass das Griffelement in einer bestimmten Winkelstellung relativ zu den Seitenstützen einrastet und damit die Funktion einer Feststellbremse erfüllt. Das Griffelement kann dann in der eingerasteten Feststellbremsen-Stellung gleichzeitig als Rückenlehne dienen (Sitzmodus). Beim Einrasten der Feststellbremse kann es zu einer optischen und spürbaren Rückkopplung mit Bestätigungsfunktion für den Benutzer kommen.

Zum Abbremsen und/oder Anhalten der Gehhilfe-Vorrichtung können grundsätzlich nicht-elektronische oder elektronische Bremsen eingesetzt werden. Bei einer besonders bevorzugten Ausführungsform kann eine Kombination einer elektronischen Bremse mit einer nicht-elektronischen Bremse vorgesehen sein. Die Kombination einer nicht-elektronischen Bremse mit einem elektronischen Bremssystem erhöht die Sicherheit für den Benutzer. Wenn die elektrische Bremse versagt, steht eine nicht-elektronische Bremse zur Verfügung. Beispielsweise kann ein Bremssystem vorgesehen sein, welches mit wenigstens einem Handbremshebel bedient wird und das Reduzieren der Geschwindigkeit ermöglicht. In diesen Zusammenhang kann eine Betätigung des Handbremshebels über eine erste Länge des möglichen Hebelweges zuerst zur Aktivierung einer elektronischen Bremse führen, wobei die weitere Betätigung des Handbremshebels über eine nachfolgende zweite Länge des Hebelweges zur Aktivierung einer mechanischen Bremse führt. Damit ist sichergestellt, dass es bei einer Störung des elektronischen Bremssystems, beispielsweise durch Unterbrechung der Stromversorgung, jedenfalls durch Betätigen der mechanischen Bremse zu einem sicheren Abbremsen der Gehhilfe-Vorrichtung kommt. Das elektronische Bremssystem kann automatisch zu einer Bremskraftverstärkung führen, was vor allem für ältere Menschen von Vorteil ist. Zudem können Sensoren vorgesehen sein, um einen Gefahrenzustand, beispielsweise eine zu große Schräglage der Gehhilfe-Vorrichtung, zu detektieren. Die Gehhilfe kann mit der elektronischen Bremse nach der Detektion automatisch abgebremst werden.

Wenigstens ein Handbremshebel ist vorzugsweise leicht erreichbar im Bereich von Greif- und Kontaktflächen des Griffelementes angeordnet. Auf unterschiedlichen bzw. gegenüberliegenden Außenseiten des Griffelementes können mehrere Handbremshebel vorgesehen sein, um eine Aktivierung der Bremsfunktionen bei unterschiedlicher Stellung der Seitenstützen gleichermaßen bei hohem Benutzerkomfort zu ermöglichen.

Bei einer weiter bevorzugten Ausführungsform der Erfindung können die Abstände von Radachsen, auf denen die Hinterräder und die Vorderräder der Gehhilfe angeordnet sind, in Abhängigkeit von der Stellung der Seitenstützen unterschiedlich sein. Vorzugsweise ist eine konstruktive Ausgestaltung der Greifhilfe derart vorgesehen, dass eine Änderung der Stellung der Seitenstützen automatisch eine Änderung der Achsabstände bewirkt, was über eine kinematische Kopplung zwischen den Seitenstützen und den Achsen erreicht werden kann. In diesem Zusammenhang sieht eine bevorzugte Lösung einen Hebelmechanismus mit einer zusätzlichen Bewegungsachse zwischen zwei Radachsen der Gehhilfe-Vorrichtung vor, um in Abhängigkeit von der Winkelstellung der Seitenstützen unterschiedliche Abstände zwischen den Radachsen einzustellen. Die Achsabstände können je nach Nutzungsmodus variiert werden. So wird entweder ein kompakterer Radabstand beispielsweise im Rollatormodus oder ein erhöhter Radabstand im Handwagenmodus und damit eine größere Transportfläche geschaffen.

Schließlich kann ein Bodenbrett/-kasten und/oder ein Sitzbrett vorgesehen sein, dass entsprechend klappbar und/oder lösbar an den Seitenstützen befestigt werden kann. Je nach Nutzungsmodus kann das Bodenbrett und/oder das Sitzbrett zu einer Aussteifung der Gehhilfe-Vorrichtung führen und/oder eine Sitzmöglichkeit schaffen.

Bei einer besonders bevorzugten Ausführungsform weist die erfindungsgemäße Gehhilfe-Vorrichtung wenigstens eine motorisierte Antriebseinrichtung für die Räder und eine Steuereinrichtung zur Ansteuerung der Antriebseinrichtung hinsichtlich Einstellung einer Antriebsgeschwindigkeit und ggf. Drehrichtung der Räder in Abhängigkeit von einer Kraft- und/oder Momenteinwirkung des Benutzers auf die Gehhilfe-Vorrichtung auf, wobei die Kraft- und/oder Momenteinwirkung über wenigstens einen Sensor erfasst und in entsprechende Bewegungsbefehle für die Ansteuerung der Antriebseinrichtung umgesetzt wird. Hierdurch wird dem Benutzer die Fortbewegung wesentlich erleichtert und er wird insbesondere bei der Bewältigung von Steigungen und Neigungen unterstützt. Eine solche Form der Antriebsunterstützung ist beispielsweise aus der DE 103 18 929 B3 bekannt.

Bei der aus der DE 103 18 929 B3 bekannten Vorrichtung mit in Haltegriffen integrierten Sensoren werden die vom Benutzer an den Haltegriffen eingebrachten Druck- und Zugkräfte gemessen. Die eingebrachten Kräfte werden im Hinblick auf die vom Benutzer gewünschte Fahrtrichtung und Geschwindigkeit ausgewertet und über die Steuereinrichtung in Fahrbewegungen der Vorrichtung umgesetzt. Nur wenn die vom Benutzer ausgeübten Druck- und Zug- bzw. Schubkräfte einer individuell vordefinierten, zugelassen Bandbreite entsprechen, setzt sich die Vorrichtung in Bewegung. Sind die Kräfte zu groß, beispielsweise durch Abstützen oder zu starkes Ziehen nach einem Stolpern, oder zu gering, beispielsweise durch zu geringen Handdruck oder durch Kontaktverlust, so bremst die vorliegende Gehhilfe-Vorrichtung gegebenenfalls bis zum völligen Stillstand ab. Da die Geschwindigkeit der Vorrichtung alleine aus den auf die Haltegriffe eingebrachten Kräften errechnet wird, müssen beim Bergauffahren keine zusätzlichen Kräfte im Vergleich zur Fortbewegung auf der geraden Ebene aufgebracht werden. Beim Bergabfahren muss die Vorrichtung nicht wie ein konventioneller Rollator ständig manuell abgebremst werden.

Zur Lösung der eingangs genannten Aufgaben sieht ein weiterer Aspekt der Erfindung in Zusammenhang mit einer Antriebsunterstützung einer Gehhilfe-Vorrichtung vor, dass die Steuereinrichtung derart ausgebildet ist, dass eine Ansteuerung der Antriebseinrichtung zur Einstellung einer bestimmten Antriebsgeschwindigkeit in Abhängigkeit von einer erfassten Kraft- und/oder Momenteinwirkung des Benutzers unverändert beibehalten wird, bis eine nachfolgende weitere Kraft- und/oder Momenteinwirkung des Benutzers einen vorgegebenen Grenzwert überschreitet. Der Grenzwert kann vorzugsweise im Nullkraftbereich und/oder im Nullmomentenbereich liegen. Wird beispielsweise eine um den Nullpunkt gemessene Kraft ermittelt, wird die Geschwindigkeit beibehalten, die zuvor aufgrund einer früheren Kraft- und/oder Momenteinwirkung des Benutzers eingestellt worden ist. Der Benutzer muss somit nach dem Anfahren der Gehhilfe-Vorrichtung nicht erneut oder dauerhaft eine bestimmte Kraft oder ein bestimmtes Moment aufbringen, um eine bestimmte Antriebsgeschwindigkeit der Räder beizubehalten. Dies trägt zu einer hohen Benutzerfreundlichkeit insbesondere für älteren Menschen mit geringen Kräften bei.

Bei einem weiteren Aspekt der Erfindung kann zur Unterstützung eines Benutzers bei der Fortbewegung wenigstens ein Sensor zum Erfassen der Steigung und/oder der Neigung der Gehhilfe vorgesehen sein, wobei die Steuereinrichtung derart ausgebildet ist, dass eine Ansteuerung der Antriebseinrichtung automatisch in Abhängigkeit von einer erfassten Steigung und/oder Neigung der Gehhilfe erfolgt. Beispielsweise kann in diesen Zusammenhang ein automatisches Abbremsen der Gehhilfe-Vorrichtung zum Anpassen der Geschwindigkeit beim Bergabfahren vorgesehen sein. Dagegen ist automatisch ein unterstützender Antrieb vorgesehen, wenn die Gehhilfe-Vorrichtung bergauf oder in der Ebene geschoben bzw. gezogen wird.

Die erfindungsgemäße Gehhilfe-Vorrichtung bietet damit dem Benutzer einen unterstützenden Antrieb abhängig vom Benutzer, seinen Bedürfnissen und dem umliegenden Gelände, wobei die Sensorik und ein Mess-, Steuer- und/oder Regelungssystem eine nutzerindizierte Geschwindigkeitswahl vorzugsweise stufenlos entsprechend der Anforderungen umsetzen kann. Die stufenlose Geschwindigkeitssteigerung oder das stufenlose Abbremsen der Gehhilfe-Vorrichtung führt als weiterer Aspekt der Erfindung zu einer ruckarmen Bewegung, was insbesondere von älteren Menschen als sehr angenehm empfunden wird.

Vorzugsweise sind mehrere Sensoren zum Erfassen einer Kraft- und/oder Momenteinwirkung des Benutzers an unterschiedlichen Stellen der Gehhilfe angeordnet. Besonders bevorzugt ist es, wenn Kraftsensoren und/oder Momentsensoren im Bereich der Drehgelenke vorgesehen sind, über die die Seitenstützen der Gehhilfe-Vorrichtung an einem Rahmen der Gehhilfe schwenkbar befestigt sind. Übt der Benutzer eine Kraft auf das Griffelement der erfindungsgemäßen Gehhilfe-Vorrichtung aus, wird diese Kraft über die Seitenstützen in den Bereich der Sensoren geleitet und dort erfasst. Die Seitenstützen wirken dabei in der Art einseitig eingespannter Balken, wobei eine Kraftbeaufschlagung am Griffelement zu einem Biegemoment im Bereich der Lagerung der Seitenstützen an dem Rahmen führt. Sensoren zur Erfassung einer Kraft- und/oder Momenteinwirkung des Benutzers können grundsätzlich auch in bzw. an einem Querholm und/oder Längsholmen des Griffelements vorgesehen sein.

Darüber hinaus können Kontaktsensoren im Griffelement vorgesehen sein, um einen Kontakt mit dem Benutzer zu erfassen. Eine Ansteuerung der Antriebseinrichtung zum Einstellen einer bestimmten Antriebsgeschwindigkeit kann beispielsweise voraussetzen, dass wenigstens ein Kontaktsensor, vorzugsweise mehrere Kontaktsensoren, einen Benutzerkontakt melden. Berührt der Benutzer die Gehhilfe dagegen nicht oder lediglich mit einer Hand, kann eine Tot-Mann-Funktion der Steuereinrichtung aktiviert werden, die die Stromzufuhr zu der Antriebseinrichtung unterbricht. Damit wird eine hohe Sicherheit für den Benutzer der Gehhilfe-Vorrichtung erreicht.

Darüber hinaus kann bei mehreren Sensoren zum Erfassen einer Kraft- und/oder Momenteinwirkung des Benutzers auch vorgesehen sein, dass auch bei unsymmetrischer, insbesondere einseitiger, Kraft- oder Momenteinwirkung automatisch eine gleiche Antriebsgeschwindigkeit aller angetriebenen Räder vorgegeben wird. Dadurch wird verhindert, dass die erfindungsgemäße Gehhilfe-Vorrichtung ungewollt eine Kurve mit einem der Größe der Asymmetrie des Kraftangriffs oder Momentangriffs am Griffelement entsprechenden Radius fährt.

Darüber hinaus kann eine Freilauffunktion als weitere Funktion der Steuereinrichtung vorgesehen sein. Hier kann ein Schaltelement an dem Griffelement oder an einer Seitenstütze angeordnet sein, dass eine Funktionswahlfläche aufweist. Bei Betätigung der Funktionswahlfläche kann die Freilauffunktion aktiviert werden, was zu einer Unterbrechung der Stromzufuhr zu der Antriebseinrichtung führt. Die Räder der Gehhilfe rollen dann widerstandlos und werden von der Antriebseinrichtung weder angetrieben noch gebremst.

Zum Erkennen eines berechtigten Benutzers kann im Übrigen ein Transponder als Teil eines RFID-Systems vorgesehen sein. Der Transponder enthält einen den Benutzer kennzeichnenden Code, der mit einem Lesegerät zum Auslesen dieser Kennung zusammenwirkt.

Um einen kompakten Aufbau und ein ästhetisch ansprechendes Erscheinungsbild der Gehhilfe-Vorrichtung zu erreichen, kann eine Antriebseinheit der Antriebseinrichtung in ein Rad der Gehhilfe, insbesondere ein Hinterrad der Gehhilfe, integriert sein. Ein in die Felge des Rades integrierter Motor wird von außen nicht wahrgenommen und die konstruktive Ausgestaltung des Fahrgestells kann unabhängig von Größe und Anordnung der Antriebseinrichtung erfolgen. Ein Energiespeicher zum Antrieb der Antriebseinrichtung kann dagegen in einen Rahmen der Greifhilfe-Vorrichtung integriert sein, so dass er von außen nicht störend wahrgenommen wird.

Es versteht sich dass die vorgenannten Merkmale der Antriebsunterstützung von Gehhilfe-Vorrichtungen auch Gegenstand eines Verfahrens zur Steuerung einer Gehhilfe-Vorrichtung sein können.

Es versteht sich weiter, dass die Merkmale der zuvor beschriebenen erfindungsgemäßen Gehhilfe-Vorrichtungen bedarfsweise miteinander kombiniert werden können, auch wenn dies nicht im Einzelnen ausdrücklich beschrieben ist. Den zuvor beschriebenen Merkmalen und Aspekten kann jeweils eigenerfinderische Bedeutung zukommen. Diese Merkmale können separate erfindungswesentliche Aspekte darstellen, die nicht notwendiger Weise an eine Ansteuerung der Antriebseinrichtung in Abhängigkeit von einer erfassten Steigung und/oder Neigung der Gehhilfe und/oder nicht an das automatische Beibehalten der Ansteuerung der Antriebseinrichtung in Abhängigkeit von einer erfassten Kraft- und/oder Momenteinwirkung des Benutzers gebunden sind. Auch lassen sich die beschriebenen Merkmale mit den nachfolgend anhand der Zeichnung beschriebenen Merkmalen kombinieren.

In der Zeichnung zeigen
- Fig. 1: eine perspektivische Ansicht einer ersten Ausführungsform einer erfindungsgemäßen mobilen Gehhilfe-Vorrichtung,
- Fig. 2A-2E: schematische Darstellungen unterschiedlicher Nutzungsmodi der in Fig. 1 gezeigten Gehhilfe-Vorrichtung,
- Fig. 3: eine perspektivische Ansicht einer weiteren Ausführungsform einer erfindungsgemäßen mobilen Gehhilfe-Vorrichtung,
- Fig. 4A-4F: schematische Darstellungen unterschiedlicher Nutzungsmodi der in Fig. 3 gezeigten Gehhilfe-Vorrichtung und
- Fig. 5-10: perspektivische Ansichten einer weiteren Ausführungsform einer erfindungsgemäßen mobilen Gehhilfe-Vorrichtung.

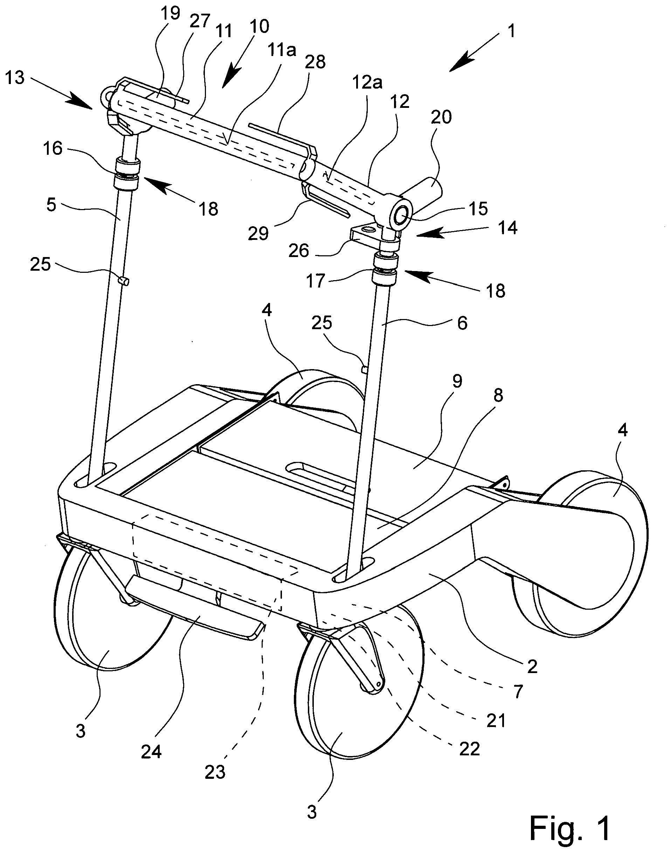

In Fig. 1 ist eine mobile Gehhilfe-Vorrichtung 1 zur Unterstützung gehbehinderter Person gezeigt, die ein Fahrgestell 2 mit zwei Vorderrädern 3 (Lenkrollen) und zwei Hinterrädern 4 (Bockrollen) aufweist. Mit dem Fahrgestell 2 sind zwei äußere Seitenstützen 5, 6 verbunden, die tragende Elemente der Gehhilfe-Vorrichtung 1 bilden. Die Seitenstützen 5, 6 sind bei der dargestellten Ausführungsform als Gestänge ausgebildet, könnten grundsätzlich aber auch durch nicht-runde Profile gebildet werden. Das Rahmendesign des Fahrgestells 2 bietet einen maximalen Bewegungsspielraum für einen Benutzer.

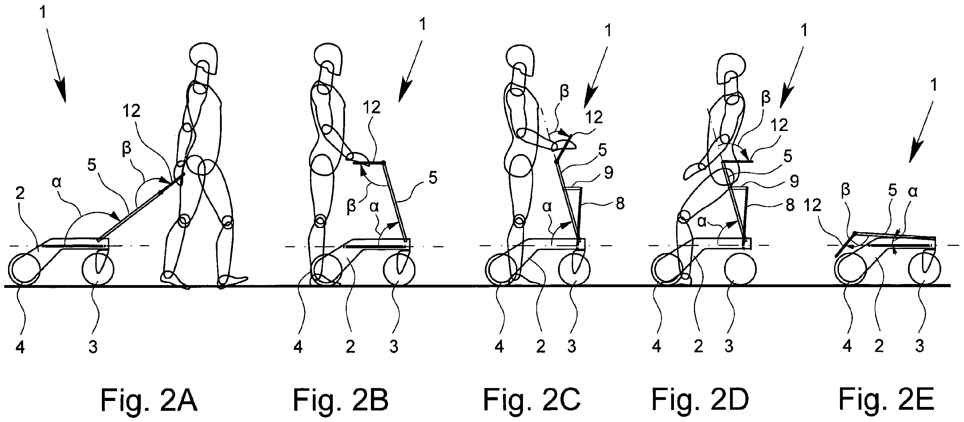

Wie sich aus den Fig. 2A bis 2E ergibt, lassen sich die Seitenstützen 5, 6 aus einer in den Fig. 2A bis 2D gezeigten ersten Stellung, insbesondere zum Schieben der Gehhilfe-Vorrichtung von hinten (Fig. 2B, 2C) und zum Abstützen eines Benutzers beim Laufen zwischen und/oder hinter der Gehhilfe-Vorrichtung (Fig. 2C) und zum Sitzen eines Benutzers auf der Gehhilfe-Vorrichtung (Fig. 2D), in wenigstens eine zweite nach vorne gekippte Stellung zum Ziehen der Gehhilfe-Vorrichtung 1 von vorne (Fig. 2A) schwenken. Zu diesem Zweck sind die Seitenstützen 5, 6 über in Fig. 1 nicht im Einzelnen gezeigte Drehgelenke 7 im Inneren des rahmenartigen Fahrgestells 2 mit dem Fahrgestell 2 verbunden. Durch die schwenkbare Verbindung der Seitenstützen 5, 6 lässt sich die Gehhilfe-Vorrichtung 1 damit in einem Handwagenmodus (Fig 2A), in einem Einkaufswagenmodus (Fig. 2B), in einem Rollatormodus (Fig. 2C) und in einem Sitzmodus (Fig. 2D) benutzen. Darüber hinaus ist es möglich, die Seitenstützen 5, 6 auf ein schwenkbar am Fahrgestell 2 befestigtes Bodenteil 8 und ein mit dem Bodenteil 8 schwenkbar verbundenes Sitzteil 9 umzulegen, was in Fig. 2E gezeigt ist. In dem in Fig. 2E gezeigten Transportmodus ergibt sich so eine geringe Baugröße der Gehhilfe-Vorrichtung 1, was für den Transport von Vorteil ist. Zumindest in der in den Fig. 2B bis 2D gezeigten ersten Stellung lassen sich die Seitenstützen 5, 6 arretieren, so dass der Winkel α zwischen den Seitenstützen 5, 6 (mit Bezug auf die Längsachsen der Seitenstützen 5, 6) und einer Ebene rechtwinklig zur Lotrichtung ca. 70° betragen kann. In der in Fig. 2A nach vorne gekippten Stellung der Seitenstützen 5, 6 kann der Winkel α dagegen zwischen 90° und 180° betragen, wobei die Seitenstützen 5, 6 vorzugsweise jede Stellung in dem vorgenannten Winkelbereich annehmen können und nicht arretiert sind. Dadurch wird ein hoher Benutzerkomfort beim Ziehen der Gehhilfe-Vorrichtung 1 im Handwagenmodus erreicht.

Die Gehhilfe-Vorrichtung 1 weist ferner ein mit beiden Seitenstützen 5, 6 verbundenes gemeinsames Griffelement 10 auf. Das Griffelement 10 ist als U-förmiger Bügel ausgebildet und weist einen mittleren Querholm 11 und zwei äußere Längsholme 12 auf. Der Querholm 11 und die Längsholme 12 weisen Greif- und Kontaktflächen 11a und 12a auf.

Das Griffelement 10 ist ein multifunktionales Bauteil und bildet das Hauptbedienelement der Gehhilfe-Vorrichtung 1. Das bügelartige Griffelement 10 verbindet die beiden Seitenstützen 5, 6 miteinander und ermöglicht die Adaption und Handhabung des Fahrzeugs. Die Verbindung zwischen dem Griffelement 10 und den Seitenstützen 5, 6 erfolgt über zwei Anschlusselemente 13, 14, mit denen das Griffelement 10 über Drehgelenke 15 auf beiden Längsseiten der Gehhilfe-Vorrichtung 1 schwenkbar verbunden ist. Das Griffelement 10 könnte auch als geschlossener Bügel ausgebildet sein mit zwei Querholmen 11, die über die Längsholme 12 miteinander verbunden sind.

Durch die Möglichkeit, dass Griffelement 10 zu verschwenken und in unterschiedlichen Winkelstellungen zu den Seitenstützen 5, 6 zu arretieren, kann die Hand- und Griffstellung des Benutzers während der Benutzung der Gehhilfe-Vorrichtung gewechselt und dadurch Ermüdungs- und Überlastungserscheinungen vorgebeugt werden. Durch die Vielzahl unterschiedlicher Griff- und Greifpositionen ist eine Anpassung an individuelle Nutzerbedürfnisse möglich.

Im Einkaufswagenmodus (Fig. 2B) kann das Griffelement 10 in einer ersten, gegenüber den Längsachsen der Seitenstützen 5, 6 nach hinten gekippten Stellung in horizontaler Lage arretierbar sein. Der Winkel β zwischen den Längsholmen 12 und den Seitenstützen 5, 6 kann ca. 110° betragen.

In einer zweiten, gegenüber den Längsachsen der Seitenstützen 5, 6 nach vorne gekippten Stellung des Griffelementes 10 (Rollatormodus gemäß Fig. 2C) kann der Winkel β zwischen den Längsachsen der Seitenstützen 5, 6 und den Längsholmen 12 dagegen vorzugsweise ca. 45° betragen. Hierbei fördert das nach oben abgewinkelte Griffelement 10 dann einen aufrechten Gang des Benutzers.

Gemäß Fig. 2D (Sitzmodus) ist das Griffelement 10 gegenüber den Längsachsen der Seitenstützen 5, 6 wiederrum nach vorne gekippt, aber im wesentlichen in horizontaler Lage angeordnet und arretiert. Das bügelartige Griffelement 10 dient dann gleichzeitig als Rückenlehne für einen Benutzer. Der Winkel β zwischen den Längsholmen 12 und den Seitenstützen 5, 6 kann in diesem Fall ca. 110° betragen.

Alle vorgenannten Winkelangaben sind bezogen auf eine Winkelmessung im Uhrzeigersinn.

Zum Ziehen der Gehhilfe-Vorrichtung 1 (Handwagenmodus gemäß Fig. 2A) lässt sich das Griffelement 10 in einer Stellung arretieren, in der das Griffelement 10 im Wesentlichen in der durch die Seitenstützen 5, 6 aufgespannten Ebene liegt. Die Seitenstützen 5,6 und die Längsholme 12 des Griffelementes 10 liegen dann auf gemeinsamen Längsachsen, bezogen auf eine Seitenansicht der Gehhilfe-Vorrichtung 1 gemäß Fig. 2A. Der Winkel β zwischen den Seitenstützen 5, 6 und den Längsholmen 12 beträgt hierbei jeweils 180°. Grundsätzlich ist es aber auch möglich, dass das Griffelement 12 beim Ziehen der Gehhilfe-Vorrichtung im Handwagenmodus nicht arretiert ist und somit Höhenänderungen des Untergrundes leicht ausgeglichen werden.

Im Transportmodus beträgt der Winkel α zwischen den Seitenstützen 5, 6 und einer Ebene rechtwinklig zur Lotrichtung vorzugsweise zwischen 0° und 15°. Im Transportmodus ist das Griffelement 10 auf die Hinterräder 4 umgeklappt, wobei der Winkel β zwischen den Längsholmen 12 und den Seitenstützen 5, 6 weniger als 135° betragen kann.

Die Anschlusselemente 13, 14 sind über rohrförmige Anschlussabschnitte 16, 17 in die Seitenstützen 5, 6 eingesteckt. Es kann eine Verstellmechanik 18 vorgesehen sein, um die Anschlusselemente 13, 14 nach oben aus den Seitenstützen 5, 6 herauszuziehen und damit die Höhe des Griffelementes 10 zum Benutzer zu verändern. Die Verstellmechanik 18 und die dazugehörigen Komponenten, beispielsweise Bowdenzüge, können in das Fahrgestell 2 integriert sein, um ein Hängenbleiben des Benutzers und daraus resultierendes Verletzungsrisiko zu minimieren. Der Betätigungsmechanismus für die Höhenverstellung des Griffelementes 10 ist unterhalb des Griffelements 10 positioniert. Der Betätigungsmechanismus kann durch Ziehen einer Manschette nach oben ausgelöst werden. Die Verstellmechanik 18 ist dabei so ausgelegt, dass beide Anschlussabschnitte 16, 17 gleichzeitig in der Höhe verstellt werden können, so dass der Querholm 11 des Griffelementes 10 bei der Höhenverstellung stets eine horizontale Lage einnimmt.

Die Anschlusselemente 13, 14 weisen jeweils eine Handballenauflage 19, 20 auf. Die Handballenauflage 19, 20 dient als tragende Stützfläche für den Handballen des Benutzers, beispielsweise im Rollatormodus (Fig. 2C). Im Einkaufswagenmodus (Fig. 2B) und/oder im Rollatormodus (Fig. 2C) kann auch lediglich das Griffelement 10 bzw. der Querholm 11 zum Schieben des Fahrzeugs bzw. Abstützen des Benutzers genutzt werden. Im Handwagenmodus (Fig. 2A) wird die Gehhilfe-Vorrichtung vorzugsweise lediglich an dem Querholm 11 gezogen.

Darüber hinaus sind im Bereich der Drehgelenke 7, über die die Seitenstützen 5, 6 schwenkbar an dem Fahrgestell 2 befestigt sind, Kraftsensoren 21 vorgesehen, die in Fig. 1 nicht im Einzelnen gezeigt sind. Ferner sind nicht dargestellte Antriebseinheiten (Motoren) in den Hinterrädern 4 und eine Steuereinrichtung zur Ansteuerung der Antriebseinheiten hinsichtlich Einstellung einer Antriebgeschwindigkeit und gegebenenfalls Drehrichtung der Hinterräder 4 in Abhängigkeit von einer Kraft- und/oder Momenteneinwirkung des Benutzers auf die Gehhilfe-Vorrichtung 1 vorgesehen. Die Steuereinrichtung ist ebenfalls nicht gezeigt

Die Kraft- und/oder Momenteneinwirkung über die Greif- und/oder Kontaktflächen 11a, 12a des Griffelementes 10 wird über die Kraftsensoren 21 erfasst und in entsprechende Bewegungsbefehle für die Ansteuerung der Antriebseinheiten umgesetzt. Bei der gezeigten Ausführungsform wird eine Krafteinwirkung des Benutzers auf das Griffelement 10 über die Seitenstützen 5, 6 zu den Kraftsensoren 21 geleitet und dort erfasst. Die Gehhilfe-Vorrichtung 1 bietet damit einen unterstützenden Antrieb abhängig vom Benutzer, seinen Bedürfnissen und dem Gelände. Das Losfahren geschieht über eine Sensorik und ein entsprechend ausgebildetes Mess-, Steuer- und/oder Regelungssystem, das eine nutzerindizierte Geschwindigkeitswahl stufenlos entsprechend der Anforderungen umsetzen kann. Damit wird ein unterstützender Antrieb geschaffen, wenn die Gehhilfe-Vorrichtung in der Ebene sowie bergauf geschoben oder gezogen wird. Beim Bergabfahren kann eine automatische Anpassung der Geschwindigkeit durch automatisches Abbremsen erfolgen. Hierbei können identische Antriebsfunktionen im Handwagenmodus, im Einkaufswagenmodus und im Rollatormodus der Gehhilfe-Vorrichtung vorgesehen sein. Wird eine um den Nullpunkt gemessene Kraft ermittelt, wird die Geschwindigkeit vorzugsweise konstant gehalten.

Zum Erfassen der Steigung und/oder Neigung der Gehhilfe-Vorrichtung 1 kann ein weiterer Sensor 22 in den Rahmen integriert sein. Die Ansteuerung der Antriebseinheiten kann dann automatisch in Abhängigkeit von einer erfassten Steigung und/oder Neigung der Gehhilfe-Vorrichtung 1 erfolgen. Bei dem Sensor 22 kann es sich um einen Gyroskop handeln. Die ermittelte Steigung bzw. das ermittelte Gefälle des Fahrzeugs kann die Drehgeschwindigkeit des Antriebs beeinflussen.

Wie sich weiter aus Fig. 1 ergibt, kann ein Akkumulator 23 in das Fahrgestell 2 integriert sein. Das Gleiche gilt für eine nicht dargestellte Ladeelektronik mit Stecker.

Die Winkelverstellung der Seitenstützen 5, 6 wird durch eine Fußleiste 24 betätigt, die mit Fixierungselementen in den Drehgelenken 7 zusammenwirkt und die Seitenstützen 5, 6 in einer bestimmten Winkelstellung sperrt bzw. arretiert.

Das multifunktionale Bodenteil 8 und das Sitzteil 9 können entsprechend geklappt und an den Seitenstützen 5, 6 über Rastvorsprünge 25 verankert werden. Durch das Bodenteil 8 und das Sitzteil 9 wird im Transportwagenmodus (Fig. 2A) eine ausreichend große Transportfläche geschaffen, während im Rollatormodus (Fig. 2C) das Bodenteil 8 und das Sitzteil 9 zur Aussteifung der Seitenstützen 5, 6 dienen kann. Im Sitzmodus (Fig. 2D) wird durch das Sitzteil eine Sitzmöglichkeit geschaffen.

An den Anschlusselementen 13, 14 kann eine Eingabeeinrichtung 26 vorgesehen sein, die eine Funktionswahlfläche in der Nähe der Greif- und/oder Kontaktflächen 11a, 12a aufweist. Über ein Schaltelement an der Funktionswahlfläche kann eine Freilaiffunktion aktiviert werden, die automatisch die Stromzufuhr zu den Antriebseinheiten unterbricht, so dass die Hinterräder 4 frei drehen können.

Eine Unterbrechung der Stromzufuhr kann im Übrigen auch im Transportmodus gemäß Fig. 2E automatisch erfolgen, wenn das Fahrzeug zusammengeklappt wird.

Im Übrigen sind am Griffelement 10 zwei parallel zum Querholm 11 angeordnete Handbremshebel 27, 28 und ein parallel zu einem Längsholm 12 angeordneter weiterer Handbremshebel 29 vorgesehen. Im Rollatormodus lässt sich mit den Handbremshebeln 27-29 eine mechanische Bremse betätigen, was ein Abbremsen und Anhalten des Fahrzeugs im Rollatormodus bei einer Unterbrechnung der Stromversorgung ermöglicht. Im Einkaufswagenmodus kann derselbe Bremsmechanismus zum Einsatz kommen wie im Rollatormodus.

Bei einer besonders bevorzugten Ausführungsform kann vorgesehen sein, dass das Griffelement 10 mit dem Bremsmechanismus derart zusammenwirkt, dass es beim Herunterdrücken des Griffelements 10 automatisch zu einer Betätigung des Bremsmechanismus kommt. Die mechanische Kopplung zwischen dem Griffelement 10 und einer Bremseinrichtung kann beispielsweise über Bowdenzüge erfolgen, die im Inneren der Seitenstützen 5, 6 verlaufen können.

Das Einrasten des Griffelementes 10 im Sitzmodus gemäß Fig. 2D kann die Funktion einer nicht-elektronischen Feststellbremse erfüllen, um die Gehhilfe-Vorrichtung 1 sicher abstellen zu können. Das Einrasten liefert hierbei eine optische und spürbare Rückkopplung und Bestätigungsfunktion für den Benutzer. Das Griffelement 10 als Rückenlehne verwendet hierbei den identischen, mechanischen Bremsmechanismus wie auch im Rollatormodus. Beim Herunterdrücken des Griffelementes 10 in der Sitzfunktion bis zu einem Rastpunkt wird die Feststellbremse aktiviert und die elektronische Steuerung automatisch deaktiviert.

Die Kombination einer nicht-elektronischen Bremse mit einem elektronischen Bremssystem kann zu einer erhöhten Sicherheit für den Benutzer beitragen. Sofern die elektrische Bremse versagt, steht eine nicht-elektronische Bremse zur Verfügung. Das Fahrzeug kann dann auch im Falle eines technischen Versagens des Motors oder der Steuerung und/oder bei einer Unterbrechung der Stromversorgung sicher abgebremst werden. Ein Bremssystem, welches mittels der Handbremshebel 27-29 betätigt wird, kann vorsehen, dass beispielsweise das erste Drittel des Hebelweges eines Handbremshebels 27-29 in eine elektronische Bremswirkung übersetzt wird. Danach greift die mechanische Bremse an den Hinterrädern 4 und/oder Vorderrädern 3.

Schließlich können im Bereich der Greif- und/oder Kontaktflächen 11a, 12a weitere Sensoren vorgesehen sein, um eine Kontakterkennung von mindestens einer Hand am Griffelement 10 zu ermöglichen. Liegt kein Kontakt vor oder lediglich ein einseitiger Kontakt, kann dies automatisch zum Auslösen einer Tot-Mann-Funktion führen, die eine Stromzufuhr zu den Antriebseinrichtungen unterbricht.

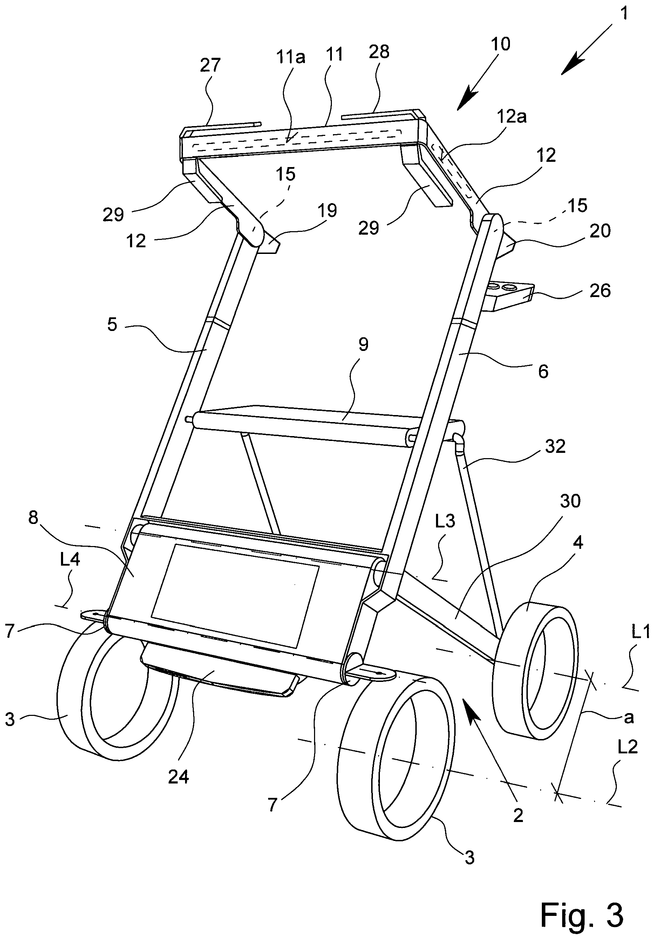

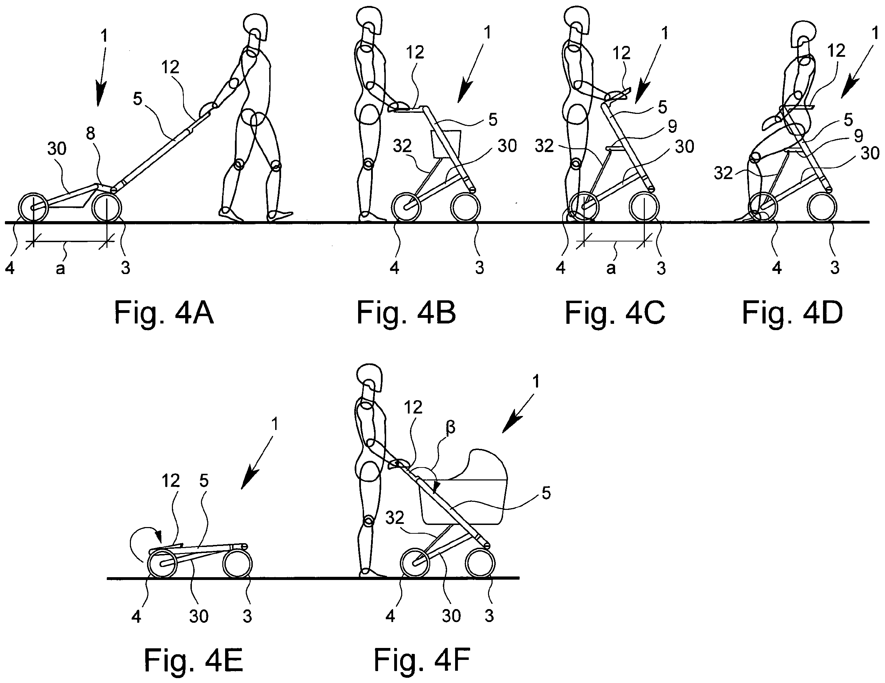

In Fig. 3 und den Figuren 4A bis 4F ist eine weitere Ausführungsform einer Gehhilfe-Vorrichtung 1 gezeigt. Funktionsgleiche Bauteile der in den Figuren 1 bis 4F gezeigten Ausführungsformen sind mit gleichen Bezugszeichen gekennzeichnet.

Die in Fig. 3 gezeigte Gehhilfe-Vorrichtung 1 lässt sich entsprechend der in den Fig. 1 bis 2E gezeigten Ausführungsform in einem Handwagenmodus (Fig. 4A), einem Einkaufswagenmodus (Fig. 4B), einem Rollatormodus (Fig. 4C) und einem Sitzmodus (Fig. 4D) benutzen. Durch Umklappen der Seitenstützen 5, 6 und des Griffelementes 10 lässt sich die Gehhilfe-Vorrichtung 1 auch in einen Transportmodus überführen, der in Fig. 4E gezeigt ist. Hierbei ist das Griffelement 10 im Uhrzeigersinn nach vorne umgeklappt worden

Darüber hinaus lässt sich die Gehhilfe-Vorrichtung 1 gemäß Fig. 4F auch in einem Kinderwagenmodus benutzen, wobei der Winkel β zwischen einem Längsholm 12 des Griffelementes 10 und einer Seitenstütze 5 ca. 180° betragen kann. Die Seitenstützen 5, 6 sind damit gegenüber der Stellung im Einkaufswagenmodus, im Rollatormodus und im Sitzmodus etwas stärker nach hinten gekippt bzw. geneigt. Bei der Nutzung im Kinderwagenmodus müssen die Seitenstützen 5, 6 nicht in der in Fig. 4F gezeigten Stellung gesperrt sein.

Die Seitenstützen 5, 6 der in Fig. 3 gezeigten Gehhilfe-Vorrichtung 1 sind stegartig ausgebildet und schwenkbar an einem Fahrgestell 2 befestigt, das neben den Vorderrädern 3 und den Hinterrädern 4 auch zwei seitliche Bodenholme 30 aufweist. Die Bodenholme 30 sind um eine Bewegungsachse L3 schwenkbar am hinteren Ende eines Bodenteils 8 befestigt. An dem vorderen Ende des Bodenteils 8 sind die Seitenstützen 5, 6 über Drehgelenke 7 angebracht. Die Bodenholme 30 bilden zusammen mit dem Bodenteil 8 und den beiden Seitenstützen 5, 6 einen Hebelmechanismus mit einer zusätzlichen Bewegungsachse L3 zwischen den Radachsen L1, L2, der es zulässt, den Abstand a zwischen den Radachsen L1 und L2 in Abhängigkeit von der Stellung der Seitenstützen 5, 6 zu verändern. Durch die zusätzliche Bewegungsachse L3 zwischen den Radachsen L1, L2 lassen sich die Achsabstände je nach Nutzungsmodus variieren. Dies ist in den Fig. 3 und 4A bis 4E lediglich schematisch gezeigt.

In den in den Fig. 4B-4E gezeigten Nutzungsmodi liegen die Seitenstützen 5, 6 und das Bodenteil 8 in einer gleichen Ebene, wobei die Seitenstützen 5, 6 am und relativ zum Bodenteil 8 in der in Fig. 3 gezeigten Stellung arretiert sind. Das Bodenteil 8 ist zwischen den Seitenstützen 5, 6 angeordnet. Eine Schwenkbewegung der Seitenstützen 5, 6 um die Drehachse 7 bzw. relativ zum Bodenteil 8 ist im arretierten Zustand nicht möglich, was durch entsprechende Rast- und/oder Feststellmittel erreicht werden kann. Der Abstand a zwischen den schematisch in Fig. 3 gezeigten Achsen L1, L2 der Hinterräder 4 und der Vorderräder 3 der Gehhilfe-Vorrichtung 1 ist damit festgelegt.

Wie sich aus einem Vergleich der Fig. 4B-4E mit Fig. 4F ergibt, ist der Abstand a zwischen den Längsachsen L1, L2 bei unterschiedlichen Nutzungsmodi unterschiedlich groß. Dies wird über den oben beschriebenen Hebelmechanismus erreicht.

Um die Gehhilfe-Vorrichtung 1 in den in Fig. 4A gezeigten Handwagenmodus zu überführen, wird die starre Verbindung zwischen dem Bodenteil 8 und den Seitenstützen 5, 6 gelöst und die Seitenstützen 5, 6 werden relativ zum Bodenteil 8 nach vorne geschwenkt. Im Handwagenmodus führt der Hebelmechanismus aufgrund der zusätzlichen Bewegungsachse L3 zwischen den Radachsen L1, L2 (Fig. 3) zu einem größeren Abstand a zwischen den Radachsen L1, L2. Damit erhält die Gehhilfe-Vorrichtung 1 entweder einen kompakteren oder sportlicheren Radabstand und wirkt damit auch dynamischer bzw. bietet durch den erhöhten Radabstand im Handwagenmodus (Fig. 4A) eine größere Transportfläche.

Zudem ist ein die Seitenstützen 5, 6 miteinander verbindendes und schwenkbar an den Seitenstützen 5, 6 befestigtes Griffelement 10 vorgesehen.

Ein Sitzteil 9 der Gehhilfe-Vorrichtung aus Fig. 3 ist über Streben 31, 32 mit dem Fahrgestell 2 verbunden. Das Sitzteil 9 kann optional einsetzbar und vom Fahrgestell 2 lösbar ausgebildet sein.

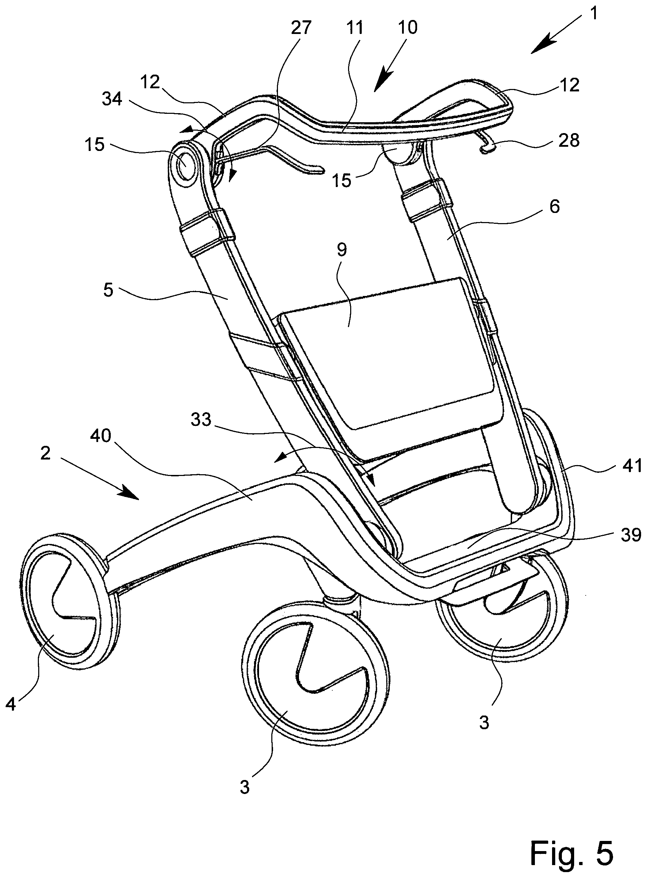

In den Fig. 5 bis 10 ist eine weitere Ausführungsform einer mobilen Gehhilfe-Vorrichtung 1 gezeigt. Funktionsgleiche oder funktionsähnliche Merkmale der anhand der Fig. 1 bis 10 beschriebenen Ausführungsformen sind mit gleichen Bezugszeichen versehen.

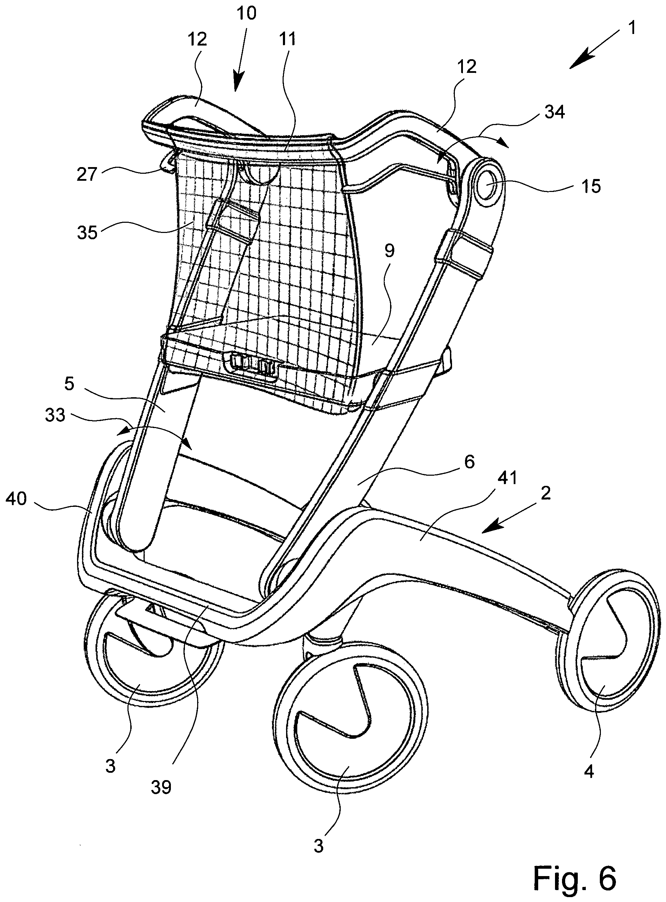

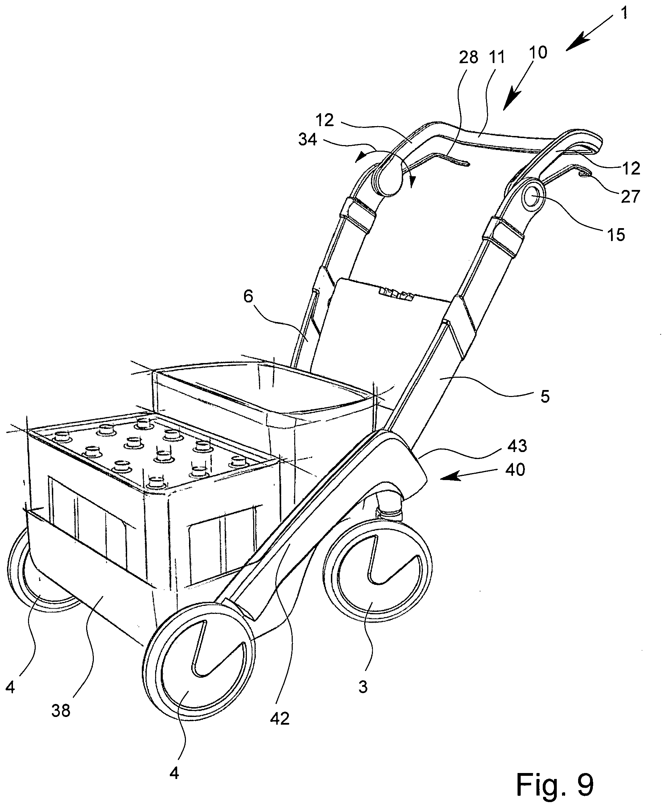

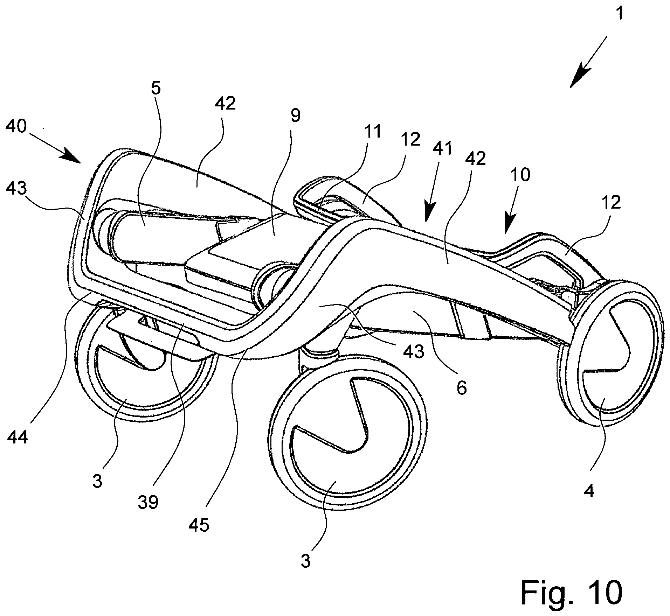

Die Fig. 5 bis 8 zeigen die Gehhilfe-Vorrichtung 1 mit nach hinten, d.h. in Richtung auf die Hinterräder 4 geschwenkten Seitenstützen 5, 6, während Fig. 9 die Vorrichtung 1 mit gegenüber der Vertikalen nach vorne geschwenkten Seitenstützen 5, 6 zeigt. Bei der in Fig. 10 gezeigten Stellung sind die Seitenstützen 5, 6 vollständig nach hinten umgelegt. Dadurch lässt sich die Vorrichtung 1 zu unterschiedlichen Zwecken gleichermaßen nutzen, nämlich als Rollator (Fig. 5), als Sitzmöglichkeit (Fig. 6), als Kinderwagen (Fig, 7), als Einkaufs- oder Transportwagen (Fig, 8) oder als Handwagen/Bollerwagen (Fig. 9), während die in Fig 10 gezeigte Stellung der Seitenstützen 5, 6 einen einfachen Transport ermöglicht. In der Transportstellung der Gehhilfe-Vorrichtung 1 sind die Seitenstützen 5, 6 weit möglichst umgelegt und liegen hierbei, vorzugsweise, auf dem Fahrwerk 2 im Bereich der Hinterräder 4 auf Ebenfalls umgelegt können dann ein Sitzteil 9 und ein Griffelement 10 sein.

Um die unterschiedlichen Nutzungsmodi zu erfüllen, sind die Seitenstützen 5, 6 mit den unteren Enden über entsprechende Gelenkverbindungen schwenkbar mit dem Fahrgestell 2 verbunden. Dies ist in Fig. 5 schematisch durch den Richtungspfeil 33 gezeigt. Je nach Nutzungsmodus können sich die Seitenstützen 5, 6 mit unterschiedlichen Winkeln zur horizontalen Ebene feststellen bzw. relativ zum Fahrgestell 2 arretieren lassen.

Im Übrigen weist die Gehhilfe-Vorrichtung 1 ein mit den beiden Seitenstützen 5, 6 verbundenes gemeinsames Griffelement 10 auf, dass wiederum als U-förmiger Bügel ausgebildet sein kann und einen mittleren Querholm 11 und zwei äußere Längsholme 12 umfasst. Der Querholm 11 und/oder die Längsholme 12 können wie oben beschrieben Greif- und Kontaktflächen aufweisen. Das Griffelement 10 ist über Drehgelenke 15 schwenkbar mit den Seitenstützen 5, 6 verbunden und lässt sich in unterschiedlichen Winkelstellungen zu den Seitenstützen 5, 6 arretieren. Die Möglichkeit, das Griffelement 10 relativ zu den Seitenstützen 5, 6 zu verschwenken, wird in Fig. 5 schematisch durch den Richtungspfeil 34 gezeigt.

Mögliche Winkeleinstellungen von Seitenstützen 5, 6 und Griffelement 10 sind weiter oben bereits allgemein beschrieben worden, so dass hierauf Bezug genommen wird.

Nicht im Einzelnen gezeigt ist, dass die Gehhilfe-Vorrichtung 1 eine arretierbare Feststellbremse an wenigstens einer Seitenstütze 5, 6 aufweisen kann.

Fig. 6 zeigt die Vorrichtung 1 bei der Verwendung als Sitz, wobei das Sitzteil 9 über eine Rückenbespannung 35 mit dem Querholm 11 des Griffteils 10 verbunden sein kann. Das Griffteil 10 ist nach vorne geschwenkt und arretiert. Damit wird eine hohe Stabilität bei der Nutzung der Vorrichtung 1 als Sitzhilfe gewährleistet.

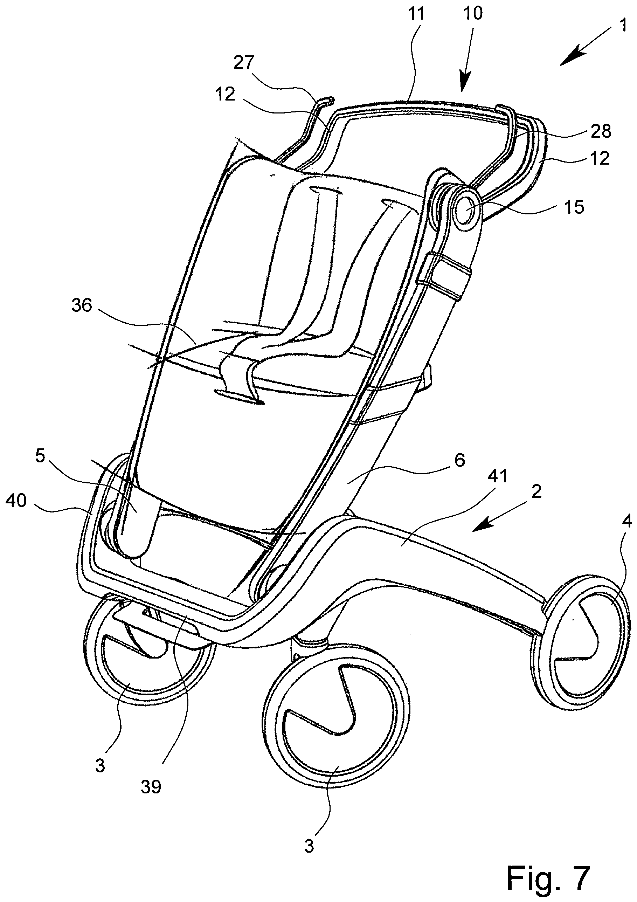

Fig. 7 zeigt die Verwendung der Vorrichtung 1 als Kinderwagen, wobei hier das Griffteil 10 bezogen auf die Längsholme 12 des Griffteils 10 gegenüber den Seitenstützen 5, 6 nach hinten geschwenkt und in dieser Stellung arretiert sein kann. Es kann eine Sitzschale 36 vorgesehen sein, die sich auf dem Sitzteil 9 abstützen und/oder mit dem Sitzteil 9 verbunden sein kann. Das Sitzteil 9 kann auch hochgeklappt sein, um das Einsetzen der Sitzschale 36 zu ermöglichen. Vorzugsweise ist die Breite der Sitzschale 36 so angepasst, dass sich die Sitzschale 36 zwischen die beiden Seitenstützen 5, 6 als integraler Bestandteil der Vorrichtung 1 einfügen lässt.

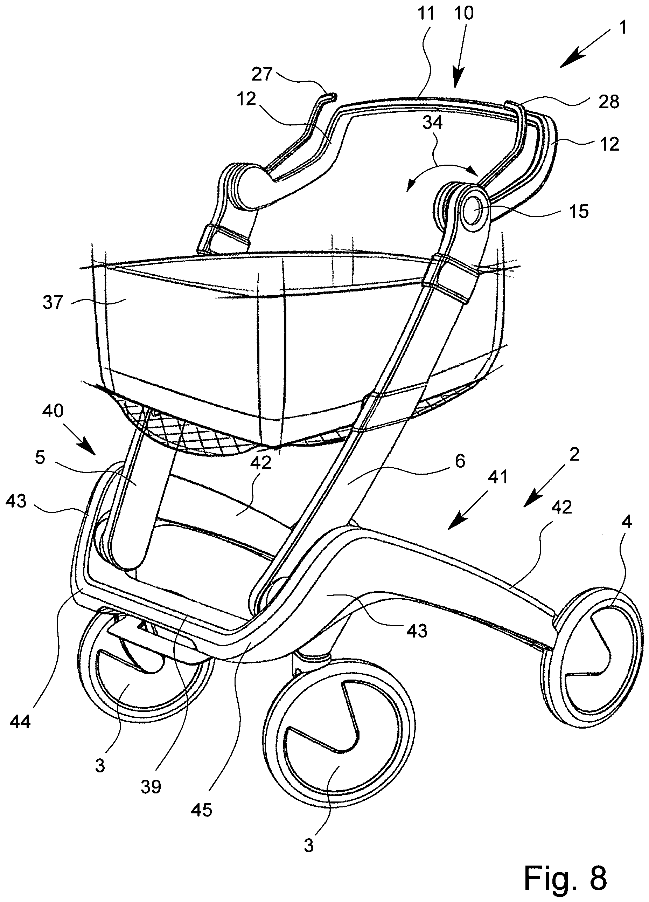

Fig. 8 zeigt die Vorrichtung 1 angepasst für einen Transport leichter Lasten, wobei ein Transportbehälter 37 bzw. eine Wanne vorgesehen sein kann, die sich auf das Sitzteil 9 aufstellen und/oder fest mit den Seitenstützen 5, 6 verbinden lassen kann. Der Transportbehälter 37 ist wiederum als integraler Bestandteil der Vorrichtung 1 ausgeführt und lässt sich zwischen die beiden Seitenstützen 5, 6 einbringen, und vorzugsweise, drehfest mit den Seitenstützen 5, 6 verbinden.

Es kann auch vorgesehen sein, dass sich das Sitzteil 9 bedarfsweise von der Gehhilfe-Vorrichtung 1 demontieren bzw. abnehmen lässt, um den Einbau einer Sitzschale 36 oder eines Transportbehälters 37 zu ermöglichen. Die Sitzschale 36 und der Transportbehälter 37 können separate Bauteile sein, die sich als Zubehörteile bedarfsweise mit der Gehhilfe-Vorrichtung 1 verbinden lassen, um eine andere Nutzung der Gehhilfe-Vorrichtung 1 zu ermöglichen.

Fig. 9 zeigt die Vorrichtung 1 als Transportwagen, wobei die beiden Seitenstützen 5, 6 gegenüber der Vertikalen nach vorne geschwenkt sind. Auch das Griffteil 10 ist nach vorne umgelegt, wobei die Längsholmabschnitte 12 näherungsweise koaxial zu den Seitenstützen 5, 6 angeordnet sind. Hierbei kann vorgesehen sein, dass sich die Seitenstützen 5, 6 und, vorzugsweise, auch das Griffteil 10 frei schwenken lassen und relativ zueinander und zum Fahrgestell 2 nicht arretiert sind. Die eigentlichen Transportfläche kann gebildet werden durch einen Transportkasten 38, der wiederum einen integralen Bestandteil der Vorrichtung 1 bildet und an die Geometrie des Fahrgestells 2 derart angepasst ist, dass er von oben und/oder seitlich auf das Fahrgestell 2 absetzbar und mit dem Fahrgestell 2 lösbar verbindbar ist. Der Transportkasten 38 kann auch als separates Zubehörteil der Gehhilfe-Vorrichtung 1 bedarfsweise mit der Gehhilfe-Vorrichtung 1 verbunden werden, wenn diese als Transportwagen genutzt werden soll.

Wie sich weiter aus Fig. 5 ergibt, weist das Fahrgestell 2 ein Rahmenprofil auf, das vorzugsweise einstückig ausgebildet ist und aus Kunststoff bestehen kann. Das Rahmenprofil wird gebildet durch einen Bodenprofilabschnitt 39, der zwei äußere Seitenprofilabschnitte 40, 41 verbindet. Die Seitenprofilabschnitte 40, 41 sind mit Bezug auf eine Seitenansicht der Vorrichtung 1 L-förmig ausgebildet. Jeder Seitenprofilabschnitt 40, 41 weist einen hinteren längeren Schenkelabschnitt 42 und einen vorderen kürzeren Schenkelabschnitt 43 auf (Fig. 8). An den freien Enden der hinteren Schenkelabschnitte 42 ist das Rahmenprofil mit den Hinterrädern 4 verbunden. Die vorderen Schenkelabschnitte 43 gehen in den Bodenprofilabschnitt 39 über. Die Übergangsbereiche 44, 45 des Rahmenprofils können gerundet sein. Zwischen den Seitenprofilabschnitten 40, 41 sind die Seitenstützen 5, 6 angeordnet. Die Seitenstützen 5, 6 können mit den freien unteren Enden schwenkbar mit dem Rahmenprofil verbunden sein. Damit weist die Vorrichtung 1 einen Aufbau auf, der zu einer hohen Benutzerfreundlichkeit und zu einer ästhetisch ansprechenden äußeren Erscheinungsform beiträgt.

Es versteht sich, dass die Merkmale der in den Fig. 1 bis 10 gezeigten und beschriebenen Ausführungsformen der Gehhilfe-Vorrichtung 1 bedarfsweise miteinander kombiniert werden können, auch wenn dies nicht im Einzelnen ausdrücklich beschrieben ist.

## Patentansprüche

1. Mobile Geh- und Transporthilfe-Vorrichtung (1) zur Unterstützung insbesondere gehbehinderter Personen, mit einem Fahrgestell (2) mit Rädern (3, 4) und mit zwei mit dem Fahrgestell (2) verbundenen äußeren Seitenstützen (5, 6) als tragenden Elementen für einen Benutzer der Vorrichtung (1), **dadurch gekennzeichnet, dass** die Seitenstützen (5, 6) aus einer ersten nach hinten gekippten Stellung zum Schieben der Geh- und Transporthilfe-Vorrichtung (1) von hinten und/oder zum Abstützen des Benutzers beim Laufen zwischen und/oder hinter der Geh- und Transporthilfe-Vorrichtung (1) und/oder zum Sitzen des Benutzers auf der Geh- und Transporthilfe-Vorrichtung (1) in wenigstens eine zweite nach vorne gekippte Stellung zum Ziehen der Geh- und Transporthilfe-Vorrichtung (1) von vorne schwenkbar am Fahrgestell (2) befestigt sind und wobei die Seitenstützen (5, 6) im Bereich der Vorderräder (3) mit dem Fahrgestell (2) verbunden sind.

2. Geh- und Transporthilfe-Vorrichtung (1) nach Anspruch 1, **dadurch gekennzeichnet, dass** die Seitenstützen (5, 6) in wenigstens einer ersten nach hinten gekippten Stellung relativ zum Fahrgestell (2) arretierbar sind und dass der Winkel zwischen einer Ebene rechtwinklig zur Lotrichtung und den Seitenstützen (5, 6) in einer nach hinten gekippten arretierten Stellung zwischen 40° und 90°, vorzugsweise zwischen 60° und 80°, weiter vorzugsweise ca. 70°, beträgt.

3. Geh- und Transporthilfe-Vorrichtung (1) nach Anspruch 1 oder 2, **dadurch gekennzeichnet, dass** in wenigstens einer nach vorne gekippten Stellung der Seitenstützen (5, 6) der Winkel zwischen einer Ebene rechtwinklig zur Lotrichtung und den Seitenstützen (5, 6) mehr als 90°, vorzugsweise bis 180°, weiter vorzugsweise zwischen 125° und 145°, beträgt.

4. Geh- und Transporthilfe-Vorrichtung (1) nach einem der vorhergehenden Ansprüche, **dadurch gekennzeichnet, dass** wenigstens ein mit beiden Seitenstützen (5, 6) verbundenes gemeinsames Griffelement (10) vorgesehen ist.

5. Geh- und Transporthilfe-Vorrichtung (1) nach Anspruch 4, **dadurch gekennzeichnet, dass** das Griffelement (10) als offener oder geschlossener Griffbügel ausgebildet ist.

6. Geh- und Transporthilfe-Vorrichtung (1) nach einem der vorhergehenden Ansprüche 4 oder 5, **dadurch gekennzeichnet, dass** das Griffelement (10) relativ zu den Seitenstützen (5, 6) schwenkbar angeordnet ist.

7. Geh- und Transporthilfe-Vorrichtung (1) nach einem der vorhergehenden Ansprüche 4 bis 6, **dadurch gekennzeichnet, dass** das Griffelement (10) in wenigstens einer ersten, gegenüber den Seitenstützen (5, 6) nach hinten geschwenkten Stellung und, gegebenenfalls, in wenigstens einer zweiten, gegenüber den Seitenstützen (5, 6) nach vorne geschwenkten Stellung arretierbar ist.

8. Geh- und Transporthilfe-Vorrichtung (1) nach einem der vorhergehenden Ansprüche, **dadurch gekennzeichnet, dass** das Griffelement (10) mit einer Bremseinrichtung zusammenwirkt und/oder dass ein Hebelmechanismus mit einer zusätzlichen Bewegungsachse zwischen zwei Radachsen der Geh- und Transporthilfe-Vorrichtung (1) vorgesehen ist, um in Abhängigkeit von der Winkelstellung der Seitenstützen (5, 6) automatisch unterschiedliche Abstände zwischen den Radachsen einzustellen.

9. Geh- und Transporthilfe-Vorrichtung (1) zur Unterstützung insbesondere gehbehinderter Personen, weiter nach einem der vorhergehenden Ansprüche, mit einem Fahrgestell (2) mit Rädern (3, 4) und mit wenigstens einer motorisierten Antriebseinrichtung für die Räder (4), mit einer Steuereinrichtung zur Ansteuerung der Antriebseinrichtung hinsichtlich Einstellung einer Antriebsgeschwindigkeit und ggf. Drehrichtung der Räder (4) in Abhängigkeit von einer Kraft- und/oder Momenteinwirkung des Benutzers auf die Geh- und Transporthilfe-Vorrichtung (1), wobei die Kraft- und/oder Momenteinwirkung über wenigstens einen Sensor (21) erfasst und in entsprechende Bewegungsbefehle für die Ansteuerung der Antriebseinrichtung umgesetzt wird, **dadurch gekennzeichnet, dass** die Steuereinrichtung derart ausgebildet ist, dass eine Ansteuerung der Antriebseinrichtung zur Einstellung einer bestimmten Antriebsgeschwindigkeit in Abhängigkeit von einer erfassten Kraft- und/oder Momenteinwirkung des Benutzers unverändert beibehalten wird, bis eine nachfolgende weitere Kraft- und/oder Momenteinwirkung des Benutzers einen vorgegebenen Grenzwert überschreitet.

10. Geh- und Transporthilfe-Vorrichtung (1) zur Unterstützung insbesondere gehbehinderter Personen, weiter nach einem der vorhergehenden Ansprüche, mit einem Fahrgestell (2) mit Rädern (3, 4) und mit wenigstens einer motorisierten Antriebseinrichtung für die Räder (4), mit einer Steuereinrichtung zur Ansteuerung der Antriebseinrichtung hinsichtlich Einstellung einer Antriebsgeschwindigkeit und ggf. Drehrichtung der Räder (4) in Abhängigkeit von einer Kraft- und/oder Momenteinwirkung des Benutzers auf die Geh- und Transporthilfe-Vorrichtung (1), wobei die Kraft- und/oder Momenteinwirkung über wenigstens einen Sensor (21) erfasst und in entsprechende Bewegungsbefehle für die Ansteuerung der Antriebseinrichtung umgesetzt wird, **dadurch gekennzeichnet, dass** wenigstens ein weiterer Sensor (22) zum Erfassen der Steigung und/oder Neigung der Gehhilfe-Vorrichtung (1) vorgesehen ist und dass die Steuereinrichtung derart ausgebildet ist, dass eine Ansteuerung der Antriebseinrichtung automatisch in Abhängigkeit von einer erfassten Steigung und/oder Neigung der Geh- und Transporthilfe-Vorrichtung (1) erfolgt.

## Claims

1. A mobile walking and transport aid device (1) for assisting in particular persons with reduced mobility, comprising a chassis (2) having wheels (3, 4) and comprising two outer side supports (5, 6) connected to the chassis (2) as supporting elements for a user of the device (1), **characterized in that** the side supports (5, 6) are fastened to the chassis (2) in a manner that allows pivoting from a first backwards tilted position for pushing the walking and transport aid device (1) from behind and/or for supporting the user when walking between and/or behind the walking and transport aid device (1) and/or for the user to sit on the walking and transport aid device (1) into at least one second forwards tilted position for pulling the walking and transport aid device (1) from the front, and wherein the side supports (5, 6) are connected to the chassis (2) in the region of the front wheels (3).

2. The walking and transport aid device (1) according to claim 1, **characterized in that** the side supports (5, 6) can be locked in at least one first backwards tilted position relative to the chassis (2) and **in that** the angle between a plane perpendicular to the vertical direction and the side supports (5, 6) in a backwards tilted locked position is between 40° and 90°, preferably between 60° and 80°, more preferably about 70°.

3. The walking and transport aid device (1) according to claim 1 or 2, **characterized in that**, in at least one forwards tilted position of the side supports (5, 6), the angle between a plane perpendicular to the vertical direction and the side supports (5, 6) is more than 90°, preferably up to 180°, more preferably between 125° and 145°.

4. The walking and transport aid device (1) according to any one of the preceding claims, **characterized in that** at least one common hand grip element (10) connected to both side supports (5, 6) is provided.

5. The walking and transport aid device (1) according to claim 4, **characterized in that** the hand grip element (10) is designed as an open or closed handle bracket.

6. The walking and transport aid device (1) according to one of the preceding claims 4 or 5, **characterized in that** the hand grip element (10) is pivotably arranged relative to the side supports (5, 6).

7. The walking and transport aid device (1) according to one of the preceding claims 4 to 6, **characterized in that** the hand grip element (10) is lockable in at least one first position pivoted backwards relative to the side supports (5, 6) and, optionally, in at least one second position pivoted forwards relative to the side supports (5, 6).

8. The walking and transport aid device (1) according to one of the preceding claims, **characterized in that** the hand grip element (10) cooperates with a braking apparatus and/or **in that** a lever mechanism having an additional movement axis is provided between two wheel axles of the walking and transport aid device (1) to adjust different distances between the wheel axles automatically depending on the angular position of the side supports (5, 6).

9. The walking and transport aid device (1) for assisting in particular persons with reduced mobility, further according to one of the preceding claims, comprising a chassis (2) having wheels (3, 4) and comprising at least one motorised drive apparatus for the wheels (4), comprising a control apparatus for controlling the drive apparatus with regard to the setting of a drive speed and, where applicable, the rotational direction of the wheels (4) depending on a force and/or moment action of the user on the walking and transport aid device (1), wherein the force and/or moment action is detected by at least one sensor (21) and converted into corresponding movement commands for controlling the drive apparatus, **characterized in that** the control apparatus is configured such that controlling the drive apparatus for setting a particular drive speed according to a detected force and/or moment action of the user is maintained unchanged until a subsequent further force and/or moment action of the user exceeds a predetermined limit.

10. The walking and transport aid device (1) for assisting in particular persons with reduced mobility, further according to one of the preceding claims, comprising a chassis (2) having wheels (3, 4) and comprising at least one motorised drive apparatus for the wheels (4), comprising a control apparatus for controlling the drive apparatus with regard to the setting of a drive speed and, where applicable, the rotational direction of the wheels (4) depending on a force and/or moment action of the user on the walking and transport aid device (1), wherein the force and/or moment action is detected by at least one sensor (21) and converted into corresponding movement commands for controlling the drive apparatus, **characterized in that** at least one further sensor (22) is provided for detecting the incline and/or decline of the walking aid device (1) and **in that** the control apparatus is configured such that the drive apparatus is automatically controlled depending on a detected incline and/or decline of the walking and transport aid device (1).

## Revendications

1. Dispositif mobile d'aide à la marche et au transport (1) destiné notamment aux personnes à mobilité réduite, avec un châssis (2) comportant des roues (3, 4) et deux supports latéraux extérieurs (5, 6) reliés au châssis (2) en tant qu'éléments de support pour un utilisateur du dispositif (1), **caractérisé en ce que** les supports latéraux (5, 6) sont montés sur le châssis (2) de manière pivotante à partir d'une première position inclinée pour pousser de l'arrière le dispositif d'aide à la marche et au transport (1) et / ou pour supporter l'utilisateur pendant la marche entre et / ou derrière le dispositif d'aide à la marche et au transport (1) et / ou pour asseoir l'utilisateur sur le dispositif d'aide à la marche et au transport (1) dans au moins une seconde position inclinée pour tirer de l'avant le dispositif d'aide à la marche et au transport (1) et dans lequel les supports latéraux (5, 6) sont reliés au châssis (2) dans la région des roues avant (3).

2. Dispositif d'aide à la marche et au transport (1) selon la revendication 1, **caractérisé en ce que** les supports latéraux (5, 6) peuvent être verrouillés dans au moins une première position inclinée vers l'arrière par rapport au châssis (2) et **en ce que** l'angle entre un plan perpendiculaire à la direction verticale et les supports latéraux (5, 6) dans une position verrouillée inclinée vers l'arrière se situe entre 40° et 90°, de préférence entre 60° et 80°, plus préférablement d'environ 70°.

3. Dispositif d'aide à la marche et au transport (1) selon la revendication 1 ou 2, **caractérisé en ce que** dans au moins une position inclinée vers l'avant des supports latéraux (5, 6), l'angle entre un plan perpendiculaire à la direction verticale et les supports latéraux (5, 6) est supérieur à 90°, de préférence peut atteindre 180°, plus préférablement se situe entre 125° et 145°.

4. Dispositif d'aide à la marche et au transport (1) selon l'une quelconque des revendications précédentes, **caractérisé en ce qu'**au moins un avec des deux supports latéraux (5, 6) est connecté à un élément de poignée commun (10).

5. Dispositif d'aide à la marche et au transport (1) selon la revendication 4, **caractérisé en ce que** l'élément de préhension (10) est conçu comme une sangle de poignée ouverte ou fermée.

6. Dispositif d'aide à la marche et au transport (1) selon l'une des revendications précédentes 4 ou 5, **caractérisé en ce que** l'élément de préhension (10) est agencé de manière à pouvoir pivoter par rapport aux supports latéraux (5, 6).

7. Dispositif d'aide à la marche et au transport (1) selon l'une quelconque des revendications précédentes 4 à 6, **caractérisé en ce que** l'élément de préhension (10) se trouve dans au moins une première position, par rapport aux supports latéraux (5, 6), et éventuellement dans au moins une position arrière une seconde, opposée aux supports latéraux (5, 6) en position pivotée vers l'avant peut être verrouillée.

8. Dispositif d'aide à la marche et au transport (1) selon l'une des revendications précédentes, **caractérisé en ce que** l'élément de poignée (10) coopère avec un dispositif de freinage et / ou **en ce qu'**un mécanisme à levier comportant un axe de déplacement supplémentaire entre deux axes de roue du dispositif d'aide à la marche et au transport (1) est prévu pour régler automatiquement des distances différentes entre les essieux des roues en fonction de la position angulaire des supports latéraux (5, 6).

9. Dispositif d'aide à la marche et au transport (1) destiné notamment aux personnes à mobilité réduite, selon l'une des revendications précédentes, avec un châssis (2) comportant des roues (3, 4) et au moins un dispositif d'entraînement motorisé pour les roues (4), avec un dispositif de commande pour commander le dispositif d'entraînement en ce qui concerne le réglage d'une vitesse d'entraînement et éventuellement du sens de rotation des roues (4) en fonction d'un effet de force et / ou de moment de l'utilisateur sur le dispositif d'aide à la marche et au transport (1), l'effet de force et / ou de moment étant détecté par au moins un capteur (21) et converti en instructions de mouvement correspondantes pour la commande du dispositif d'entraînement, **caractérisé en ce que** le dispositif de commande est conçu de telle sorte qu'une commande du dispositif d'entraînement pour régler une vitesse d'entraînement particulière en fonction d'un effet détecté de force et/ou de moment de l'utilisateur est maintenue inchangée jusqu'à ce qu'un autre effet ultérieur de force et / ou de moment de l'utilisateur dépasse une limite prédéterminée.

10. Dispositif d'aide à la marche et au transport (1) destiné notamment aux personnes à mobilité réduite, selon l'une des revendications précédentes, avec un châssis (2) comportant des roues (3, 4) et au moins un dispositif d'entraînement motorisé pour les roues (4), avec un dispositif de commande pour commander le dispositif d'entraînement en ce qui concerne le réglage d'une vitesse d'entraînement et éventuellement du sens de rotation des roues (4) en fonction d'un effet de force et / ou de moment de l'utilisateur sur le dispositif d'aide à la marche et au transport (1), l'effet de force et / ou de moment étant détecté par au moins un capteur (21) et converti en instructions de mouvement correspondantes pour la commande du dispositif d'entraînement, **caractérisé en ce qu'**il est prévu au moins un autre capteur (22) pour détecter l'inclinaison positive et / ou négative du dispositif d'aide à la marche (1) et **en ce que** le dispositif de commande est conçu de telle sorte qu'une commande du dispositif d'entraînement est réalisée automatiquement en fonction d'une inclinaison positive et/ou négative détectée du dispositif d'aide à la marche et au transport (1).
